# EUROPEAN PATENT APPLICATION

(11) **EP 4 485 775 A1**
(43) Date of publication of application: **01.01.2025**
(21) Application number: 23759371.0
(22) Date of filing: 16.02.2023
(51) Int. Cl.: H02M 1/00, H02M 1/36, H02M 3/158, H02M 1/08, H02H 7/12

(54) **HIGH-EFFICIENCY HYBRID REGULATOR**

(30) Priority: 22.02.2022 KR 20220022703
(71) Applicant: Lucid Microsystems Pte Ltd., Suwon-si Gyeonggi-do 16505 (KR)
(72) Inventor: SONG, Kyung Hoon, Suwon-si, Gyeonggi-do 16505 (KR)
(74) Representative: Boult Wade Tennant LLP
(86) International application number: PCT/IB2023/000041
(87) International publication number: WO 2023/161709

(57) **Abstract**

An embodiment provides a regulator comprising: a switch network which includes a first switch block, a second switch block, a third switch block, and a fourth switch block, which are connected to each other in series, wherein a flying capacitor is connected to a node at which the first switch block and the second switch block are connected and to a node at which the third switch block and the fourth switch block are connected, and an inductor is connected to a node at which the second switch block and the third switch block are connected; and a control circuit which can control the switch network to a first state in which the first switch block and the second switch block are turned on, a second state in which the third switch block and the fourth switch block are turned on, a third state in which the first switch block and the third switch block are turned on, and a fourth state in which the second switch block and the fourth switch block are turned on, and which controls the switch network such that the third state and the fourth state, in which inductor current forms a resonant waveform, alternate, and controls, when the magnitude of the inductor current is out of a required range, the switch network such that the first state or the second state is between the third state and the fourth state.

## Description

### Technical Field

The present disclosure relates to a power conversion device.

### Background Art

A general buck converter or boost converter delivers energy through an inductor.

Such a buck converter or boost converter has an advantage that output power may be stably controlled when currents flowing in an inductor are well controlled. However, a relatively high direct current resistance of the inductor may result in power losses. Since power losses in a direct current resistance increase in proportion to a square of an output current, the power delivery through an inductor may have a problem that the efficiency decreases as the power amount to be delivered increases.

In order to alleviate such a problem, switched capacitor converters, that deliver energy through capacitors having low direct current resistances, are emerging.

However, although a switched capacitor converter has an advantage that it has a high efficiency, it also has a disadvantage that, for a stable control of output power, a linear regulator having a low efficiency needs to be added or input power needs to be controlled through a separate global loop such as a programmable power supply (PPS) adapter.

### DETAILED DESCRIPTION OF THE INVENTION

### Technical Problem

In this background, in an aspect, the present disclosure is to provide a power conversion device having a high efficiency. In another aspect, the present disclosure is to provide a technology for stably controlling a power conversion device without adding complicated components. In another aspect, the present disclosure is to provide a relatively small-sized power conversion device.

### Technical Solution

To this end, an embodiment of the present disclosure provides a regulator comprising: a switch network, including a first switch block, a second switch block, a third switch block, and a fourth switch block connected in series, connected with a flying capacitor through a first node, to which the first switch block and the second switch block are connected, and through a second node, to which the third switch block and the fourth switch block are connected, and connected with an inductor through a third node, to which the second switch block and the third switch block are connected; and a control circuit to control the switch network to be in a first state where the first switch block and the second switch block are turned on, a second state where the third switch block and the fourth switch block are turned on, a third state where the first switch block and the third switch block are turned on, or a fourth state where the second switch block and the fourth switch block are turned on, to control the switch network to be alternately in the third state and in the fourth state where an inductor current forms a resonant waveform, and to control the switch network such that the first state is formed between the third state and the fourth state when the magnitude of the inductor current is beyond a required range.

The control circuit may end the third state or the fourth state when the inductor current reaches the zero level.

When a high voltage is supplied through one side of the first switch block and the magnitude of the inductor current is less than the required range, the control circuit may control the switch network such that the first state is formed between the third state and the fourth state.

When an input voltage is less than a voltage obtained by subtracting a delta voltage from R times (R is a positive number equal to or higher than 2) of an output voltage, the control circuit may control the switch network such that the first state is formed between the third state and the fourth state.

When a low voltage is supplied through one side of the fourth switch block and the magnitude of the inductor current is greater than the required range, the control circuit may control the switch network such that the second state is formed between the third state and the fourth state.

When a voltage of the third node is lower than a first lower limit value, the control circuit may control the switch network such that the second state is formed between the third state and the fourth state. Otherwise, when a voltage of the flying capacitor is less than an upper limit value and greater than a second lower limit value, the control circuit may control the switch network such that the second state is formed between the third state and the fourth state.

The control circuit may end the third state or the fourth state before the inductor current reaches the zero level and, when the inductor current reaches the zero level during the second state is in action, the control circuit may end the second state.

The control circuit may control the switch network to be in a fifth state where the first switch block and the fourth switch block are turned on. When a voltage of the flying capacitor is lower than a predetermined range, the control circuit may control the switch network to be in the fifth state.

The control circuit may operate a power semiconductor, included in the first switch block or the fourth switch block, in a linear mode during the fifth state is in action so as to limit the magnitude of a current supplied to the flying capacitor.

The control circuit may control the switch network to be in a sixth state where the second switch block and the third switch block are turned on. When a voltage of the flying capacitor is higher than a predetermined range, the control circuit may control the switch network to be in the sixth state.

When a difference between a control value and a reference value is higher than a criterion value, the control circuit may control the switch network to be in the third state or the fourth state and, when the difference between the control value and the reference value is lower than the criterion value, the control circuit may control the switch network to be in a state where the first switch block to the fourth switch block are turned off.

The control circuit may control the switch network to be basically in the third state or the fourth state. However, in a case when sufficient power cannot be delivered only with the third state and the fourth state, the control circuit may control the switch network to be in the first state and, when the magnitude of the inductor current is greater than the required range, it may control the switch network to be in the second state.

A high voltage is supplied to one side of the first switch block, and a power semiconductor included in the first switch block may be an active device having characteristics of a bi-directional body diode.

Another aspect of the present disclosure provides a regulator comprising: a switch network including multiple switch devices, connected with a flying capacitor through at least two of connection nodes for the switch devices, connected with an inductor through at least one of the connection nodes, supplied with a high voltage through one side, and supplied with a low voltage through the other side; and a control circuit to control the switch network to be in a first state where the high voltage is connected to one side of the inductor, a second state where the low voltage is connected to one side of the inductor, a third state where the high voltage, the flying capacitor, and the inductor are connected in series so that an inductor current forms a resonant waveform, and a fourth state where the low voltage, the flying capacitor, and the inductor are connected in series so that the inductor current forms a resonant waveform, to control the switch network to be alternately in the third state and the fourth state, and to control the switch network such that the first state or the second state is formed between the third state and the fourth state when the magnitude of the inductor current is beyond a required range.

When the inductor current reaches the zero level, the control circuit may end the third state or the fourth state.

When a difference between a control value and a reference value is higher than a criterion value, the control circuit may output a pulse enable signal with a high level. When the number that the inductor current reaches the zero level is more than N times (N is a natural number equal to or higher than 2) in a state where the pulse enable signal is maintained at a high level, the control circuit may control the switch network such that the first state is formed between the third state and the fourth state.

When the first state is in action, the control circuit may generate a power up flag and transmit it to a device controlling a power supplier so that the power supplier supplying the high voltage can increase output power.

When the first state is not in action, the control circuit may not generate the power up flag and calculate an efficiency value. When the efficiency value is less than a target value, the control circuit may generate a power down flag so that the power supplier may decrease output power.

When the magnitude of the inductor current is less than the required range, the control circuit may control the switch network such that the first state is formed between the third state and the fourth state.

When the magnitude of the inductor current is greater than the required range, the control circuit may control the switch network such that the second state is formed between the third state and the fourth state.

The control circuit may control the switch network to be in a fifth state where one side of the inductor floats and the high voltage, the flying capacitor, and the low voltage are connected in series. When the flying capacitor has a voltage lower than a predetermined range, the control circuit may control the switch network to be in the fifth state.

In an initial operation, the control circuit may control the switch network to be in the fifth state and operate a power semiconductor, which is turned on in the fifth state, in a linear mode to limit the magnitude of a current supplied to the flying capacitor.

Another aspect of the present disclosure provides a regulator including multiple regulator blocks, sharing outputs and disposed in parallel to each other, each comprising: a switch network including multiple switch devices, connected with a flying capacitor through at least two of connection nodes for the switch devices, connected with an inductor through at least one of the connection nodes, supplied with a high voltage through one side, and supplied with a low voltage through the other side; and a control circuit to control the switch network to be in a first state where the high voltage is connected to one side of the inductor, a second state where the low voltage is connected to one side of the inductor, a third state where the high voltage, the flying capacitor, and the inductor are connected in series so that an inductor current forms a resonant waveform, and a fourth state where the low voltage, the flying capacitor, and the inductor are connected in series so that the inductor current forms a resonant waveform, to control the switch network to be alternately in the third state and the fourth state, and to control the switch network such that the first state or the second state is formed between the third state and the fourth state when the magnitude of the inductor current is beyond a required range.

The regulator may further comprise a multiplexer (MUX) circuit to make the regulator blocks share inputs.

The regulator may further comprise a switched capacitor converter disposed at an input side of the regulator blocks.

Regarding the third state and the fourth state, the regulator may control at least two of the regulator blocks to be in different states.

### Effects of the Invention

As described above, according to the present disclosure, the efficiency of a power conversion device may increase, be stably controlled without adding complicated components, and be reduced in its size.

### BRIEF DESCRIPTION OF THE DRAWINGS

FIG. 1 is a configuration diagram of an example of a power conversion device.
FIG. 2 is a configuration diagram of another example of a power conversion device.
FIG. 3 is a configuration diagram of a regulator according to an embodiment.
FIG. 4 is a diagram showing a zeroth state of a switch network according to an embodiment.
FIG. 5 is a diagram showing a first state of a switch network according to an embodiment.
FIG. 6 is a diagram showing a second state of a switch network according to an embodiment.
FIG. 7 is a diagram showing a third state of a switch network according to an embodiment.
FIG. 8 is a diagram showing a fourth state of a switch network according to an embodiment.
FIG. 9 is a diagram showing a pulse shaping of an inductor current using a third state and a fourth state in an embodiment.
FIG. 10 is a diagram showing that a first state and a second state are additionally formed between a third state and a fourth state in an embodiment.
FIG. 11 is a diagram showing an over-shaped pulse and an under-shaped pulse.
FIG. 12a is a diagram of a first example showing that a regulator adds a first state between a third state and a fourth state.
FIG. 12b is a diagram of a second example showing that a regulator adds a first state between a third state and a fourth state.
FIG. 13a is a diagram of a first example showing that a regulator adds a second state between a third state and a fourth state.
FIG. 13b is a diagram of a second example showing that a regulator adds a second state between a third state and a fourth state.
FIG. 14 is a diagram showing a fifth state of a switch network according to an embodiment.
FIG. 15 is a diagram showing a sixth state of a switch network according to an embodiment.
FIG. 16 is a diagram showing an exemplary configuration for performing a pulse-skip control in a control circuit according to an embodiment.
FIG. 17a is a diagram showing a main waveform in a first example of a pulse-skip control.
FIG. 17b is a diagram showing a main waveform in a second example of a pulse-skip control.
FIG. 18 is a diagram of a third example showing that a regulator adds a first state between a third state and a fourth state.
FIG. 19 is a diagram showing an example of an input and an output of a regulator according to an embodiment.
FIG. 20 is a diagram for illustrating device characteristics of a first switch in a switch network according to an embodiment.
FIG. 21 is a configuration diagram of a first example of an expanded regulator.
FIG. 22 is a configuration diagram of a second example of an expanded regulator.
FIG. 23 is a configuration diagram of a third example of an expanded regulator.
FIG. 24 is a diagram showing a first control state of a regulator according to a third example.
FIG. 25 is a diagram showing a second control state of a regulator according to a third example.
FIG. 26 is a diagram showing a third control state of a regulator according to a third example.
FIG. 27 is a diagram showing a fourth control state of a regulator according to a third example.
FIG. 28 is a diagram showing main waveforms associated with a regulator according to a third example.
FIG. 29 is a diagram showing a cooperative control of a regulator and a host according to an embodiment.
FIG. 30 is a flow diagram of a method for a cooperative control of a regulator and a host according to an embodiment.

### Mode for Implementing the Invention

Hereinafter, some embodiments of the present disclosure will be described in detail with reference to the accompanying exemplary drawings. With regard to the reference numerals of the components of the respective drawings, it should be noted that the same reference numerals are assigned to the same components even though they are shown in different drawings. In addition, in describing the present disclosure, a detailed description of a well-known configuration or function related the present disclosure, which may obscure the subject matter of the present disclosure, will be omitted.

In addition, terms, such as "1st", "2nd", "A", "B", "(a)", "(b)", or the like, may be used in describing the components of the present disclosure. These terms are intended only for distinguishing a corresponding component from other components, and the nature, order, or sequence of the corresponding component is not limited to the terms. In the case where a component is described as being "coupled", "combined", or "connected" to another component, it should be understood that the corresponding component may be directly coupled or connected to another component or that the corresponding component may also be "coupled", "combined", or "connected" to the component via another component provided therebetween.

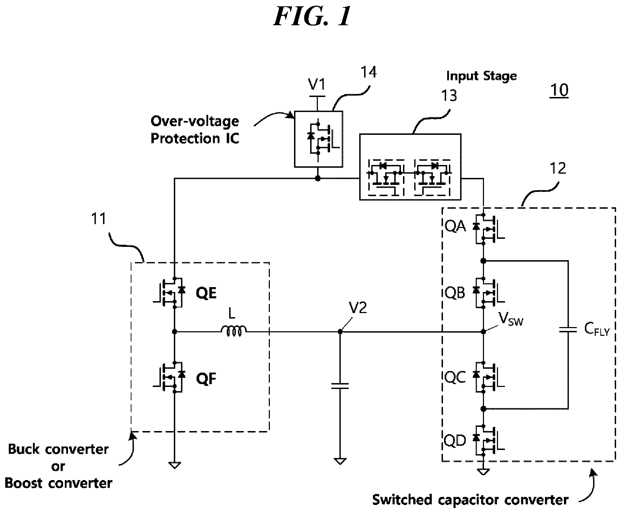

FIG. 1 is a configuration diagram of an example of a power conversion device.

Referring to FIG. 1, a power conversion device 10 may comprise an inductor converter 11, a switched capacitor converter 12, an input stage 13, and an over-voltage protection integrated circuit (IC) 14.

The inductor converter 11 may comprise an upper switch QE, a lower switch QF, and an inductor L.

The switched capacitor converter 12 may comprise a first switch QA, a second switch QB, a third switch QC, and a fourth switch QD, and comprise a flying capacitor C_{FLY}.

Depending on cases, the power conversion device 10 may convert power inputted with a first voltage V1 and output power with a second voltage V2, or convert power inputted with the second voltage V2 and output power with the first voltage V1.

In a case when not functioning as a PPS adapter, the power conversion device 10 may convert power using the inductor converter 11 and in a case when functioning as a PPS adapter, it may convert power using the switched capacitor converter 12.

Here, the switched capacitor converter 12 is a hard switched capacitor converter in which a switch is turned on/off during currents flow.

The power conversion device 10 shown in FIG. 1 is required to use two different IC together. Accordingly, it has a disadvantage that the size of a solution is big and it highly costs. Additionally, in a case when using the switched capacitor converter 12, the power conversion device 10 needs to additionally use the input stage 13 and the over-voltage protection IC 14 for regulation of power in an abnormal situation, for example, in a situation of a malfunction or a delayed operation in power control of a PPS adapter, which results in lowering the efficiency and enlarging the size. Further, the power conversion device 10 may use a flying capacitor C_{FLY} with a large capacitance in order to increase the efficiency of the switched capacitor converter 12, and such a flying capacitor with a large capacitance C_{FLY} may cause to enlarge the entire size.

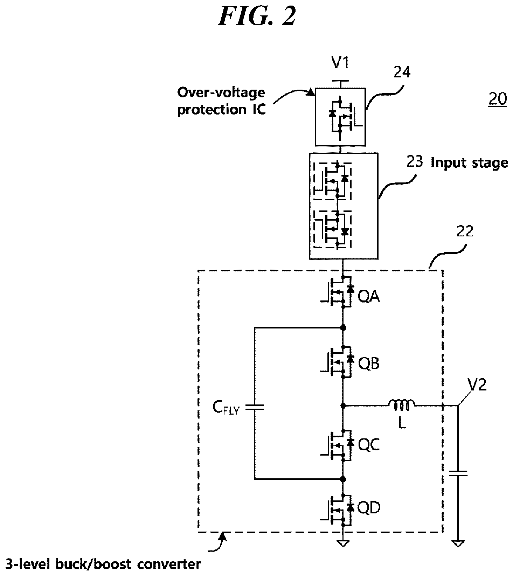

FIG. 2 is a configuration diagram of another example of a power conversion device.

Referring to FIG. 2, a power conversion device 20 may comprise a 3-level buck/boost converter 22, an input stage 23, and an over-voltage protection IC 24.

The 3-level buck/boost converter 22 may comprise a first switch QA, a second switch QB, a third switch QC, and a fourth switch QD, and comprise an inductor L and a flying capacitor CFLy.

The power conversion device 20 may convert power inputted with a first voltage V1 and output power with a second voltage V2.

In a case when not functioning as a PPS adapter, the power conversion device 20 may convert power using the 3-level buck/boost converter 22 and in a case when functioning as a PPS adapter, it may operate the components included the 3-level buck/boost converter 22 as a hard switched capacitor converter.

The power conversion device 20 shown in FIG. 2 may have a smaller solution size than the power conversion device shown in FIG. 1 (10 in FIG. 1). However, when operating as a hard switched capacitor converter, since power losses are great due to a high direct current resistance of the inductor L, the power conversion device 20 shown in FIG. 2 may have a lower efficiency in power conversion compared with a general switched capacitor converter.

In addition, as the power conversion device shown in FIG. 1 (10 in FIG. 1), the power conversion device 20 shown in FIG. 2 is required to use the input stage 23 and the over-voltage protection IC 24, which results in lowering the efficiency and enlarging the size. Further, the flying capacitor with a large capacitance C_{FLY} may cause to enlarge the entire size.

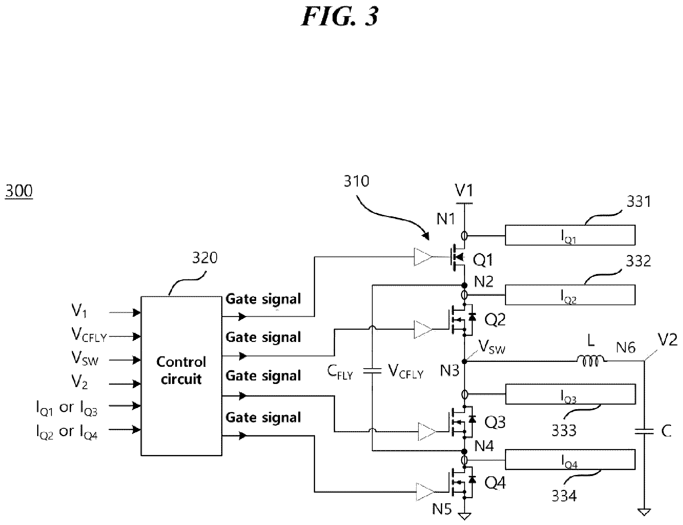

FIG. 3 is a configuration diagram of a regulator according to an embodiment.

Referring to FIG. 3, a regulator 300 may comprise a switch network 310, a control circuit 320, and current sensors 331-334.

The regulator 300 may convert power inputted with a first voltage V1 through a first node N1 to generate power with a second voltage V2 and output it through a sixth node N6. Alternatively, the regulator 300 may convert power inputted with the second voltage V2 through the sixth node N6 to generate power with the first voltage V1 and output it through the first node N1.

The switch network 310 may comprise a first switch block, a second switch block, a third switch block, and a fourth switch block connected in series.

Each switch block may include at least one switch. For example, the first switch block may include a first switch Q1, the second switch block may include a second switch Q2, the third switch block may include a third switch Q3, and the fourth switch block may include a fourth switch Q4. Although the below descriptions are made focusing on an example in which each switch block includes one switch, the present disclosure is not limited thereto.

Hereinafter, control over the first switch Q1 may be understood as control over the first switch block, control over the second switch Q2 may be understood as control over the second switch block, control over the third switch Q3 may be understood as control over the third switch block, and control over the fourth switch Q4 may be understood as control over the fourth switch block. For example, turning off the first switch Q1 may be understood as turning off the first switch block and turning on the second switch Q2 may be understood as turning on the second switch block.

The first switch Q1, the second switch Q2, the third switch Q3, and the fourth switch Q4 may be power semiconductors. For example, the first switch Q1, the second switch Q2, the third switch Q3, and the fourth switch Q4 may be metal oxide semiconductor filed effect transistors (MOSFETs), insulated gate bipolar transistors (IGBTs), or other forms or power semiconductors.

The first switch Q1, the second switch Q2, the third switch Q3, and the fourth switch Q4 may be connected in series. For example, the first switch Q1 and the second switch Q2 may be connected with each other through a second node N2, the second switch Q2 and the third switch Q3 may be connected with each other through a third node N3, and the third switch Q3 and the fourth switch Q4 may be connected with each other through a fourth node N4.

At one side of the first switch Q1, the first node N1 may be formed, and the second nod N2 may be formed at the other side thereof. Through the first node N1, the first voltage V1 may be supplied or outputted. At one side of the fourth switch Q4, a fifth node N5 may be formed, and a fourth node N4 may be formed at the other side thereof. Through the fifth node N5, a low voltage, for example, a ground voltage may be supplied. The first voltage V1 supplied through the first node N1 may be relatively higher than the low voltage supplied through the fifth node N5. Therefore, the voltage supplied through the first node N1 may be referred to as a high voltage and the voltage supplied through the fifth node N5 may be referred to as a low voltage.

To the switch network 310, an inductor L and a flying capacitor C_{FLY} may be connected.

The flying capacitor C_{FLY} may be connected by its one side to the second node N2, to which the first switch Q1 and the second switch Q2 are connected, and connected by its other side to the fourth node N4, to which the third switch Q3 and the fourth switch Q4 are connected.

The inductor L may be connected by its one side to the third node N3, to which the second switch Q2 and the third switch Q3 are connected, and connected by its other side to the sixth node N6, through which the second voltage V2 is outputted.

Additionally, between the sixth node N6 and the low voltage, an output capacitor C may be further disposed.

The control circuit 320 may control the switches Q1-Q4 included in the switch network 310. The control circuit 320 may make the switch network 310 to be in multiple states by turning on or off the switches Q1-Q4.

The control circuit 320 may transmit a gate signal to each of gates of the switches Q1-Q4 to turn on or off each of the switches Q1-Q4.

The control circuit 320 may operate at least one of the switches Q1-Q4 in a linear mode. In operation in the linear mode, the amount of a current flowing into the at least one switch may be limited at a predetermined level according to a gate signal.

The control circuit 320 may sense currents or voltages of the switch network 310 or the respective nodes N1-N6 and change the state of the switch network 310 using sensed values.

For example, the control circuit 320 may sense the first voltage V1, the second voltage V2, a flying capacitor voltage V_{CFLY}, a third node voltage Vsw, etc. Additionally, the control circuit 320 may sense a current of the first switch I_{Q1}, a current of the second switch I_{Q2}, a current of the third switch I_{Q3}, a current of the fourth switch I_{Q4}, etc.

The control circuit 320 may determine or change the state of the switch network 310 using at least one sensing value among the first voltage V1, the second voltage V2, the flying capacitor voltage V_{CFLY}, the third node voltage Vsw, the current of the first switch I_{Q1}, the current of the second switch I_{Q2}, the current of the third switch I_{Q3}, and the current of the fourth switch I_{Q4}.

All of the above-described values may be sensed, or only some of them may be sensed. For example, the control circuit 320 may sense only one of the current of the first switch I_{Q1}, and the current of the third switch I_{Q3}, and may sense only one of the current of the second switch I_{Q2} and the current of the fourth switch I_{Q4}.

The control circuit 320 may control the switch network 310 to be in 7 states described below.

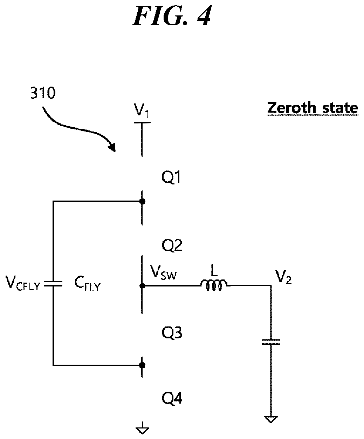

FIG. 4 is a diagram showing a zeroth state of a switch network according to an embodiment.

Referring to FIG. 4, the control circuit may turn off all switches Q1-Q4 of the switch network 310 so that the switch network 310 may be in a zeroth state.

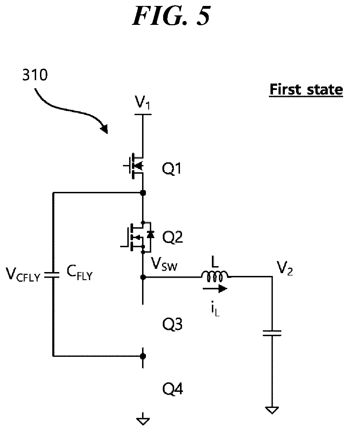

FIG. 5 is a diagram showing a first state of a switch network according to an embodiment.

Referring to FIG. 5, the control circuit may turn on the first switch Q1 and the second switch Q2 and turn off the third switch Q3 and the fourth switch Q4 to make the switch network 310 be in a first state.

In the first state, the flying capacitor C_{FLY} may float and the flying capacitor voltage V_{CFLY} may be maintained at a predetermined level.

Through one side of the first switch Q1, the first voltage V1 (high voltage) may be supplied and, in the first state, the first voltage V1 may be supplied through one side of the inductor L by the first switch Q1 and the second switch Q2 turned on and the third switch Q3 and the fourth switch Q4 turned off.

Through the other side of the inductor L, the second voltage V2 may be suppled. Accordingly, in the first state, through the one side of the inductor L, the first voltage V1 may be supplied and, through the other side thereof, the second voltage V2 may be supplied. By such voltages V1, V2, an inductor current i_{L} may be built up in the first state.

Operations of the switch network in the first state may be identical to operations of a buck converter or a boost converter.

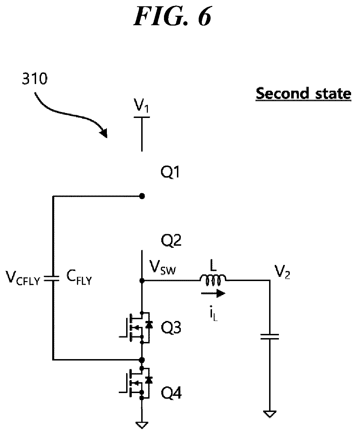

FIG. 6 is a diagram showing a second state of a switch network according to an embodiment.

Referring to FIG. 6, the control circuit may turn off the first switch Q1 and the second switch Q2 and turn on the third switch Q3 and the fourth switch Q4 to make the switch network 310 be in a second state.

In the second state, the flying capacitor C_{FLY} may float and the flying capacitor voltage V_{CFLY} may be maintained at a predetermined level.

Through one side of the fourth switch Q4, the ground voltage (low voltage) may be supplied and, in the second state, the ground voltage (low voltage) may be supplied through one side of the inductor L by the first switch Q1 and the second switch Q2 turned off and the third switch Q3 and the fourth switch Q4 turned on.

Through the other side of the inductor L, the second voltage V2 may be suppled. Accordingly, in the second state, through the one side of the inductor L, the ground voltage (low voltage) may be supplied and, through the other side thereof, the second voltage V2 may be supplied. By such voltages, an inductor current i_{L} may be built up in the second state.

The inductor current i_{L} may be built up in opposite directions in the first state and the second state. For example, supposing that the direction of a current flowing from one side to the other side of the inductor L is a positive direction, the inductor current i_{L} may be built up toward increase in the first state, and the inductor current i_{L} may be built up toward decrease in the second state.

Operations of the switch network in the second state may be identical to operations of a buck converter or a boost converter.

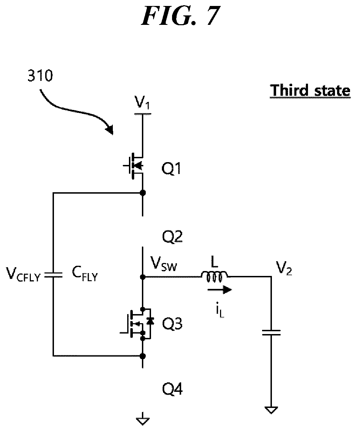

FIG. 7 is a diagram showing a third state of a switch network according to an embodiment.

Referring to FIG. 7, the control circuit may turn on the first switch Q1 and the third switch Q3 and turn off the second switch Q2 and the fourth switch Q4 to make the switch network 310 be in a third state.

In the third state, the flying capacitor C_{FLY} and the inductor L may be connected with each other in series so that the inductor current i_{L} and the flying capacitor voltage V_{CFLY} may form resonant waveforms.

In the third state, the inductor current i_{L} may form a resonant waveform, which increases and then decreases. The control circuit may turn off or turn on the respective switch Q1-Q4 at zero current according to such a resonant waveform of the inductor current i_{L}.

Operations of the switch network in the third state may be identical to operations of a resonant converter.

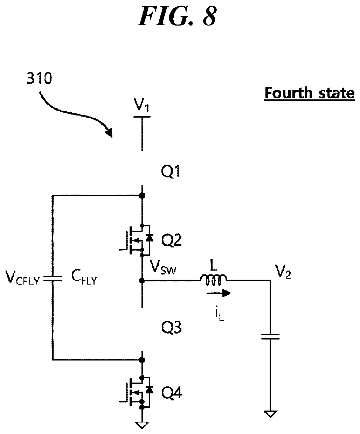

FIG. 8 is a diagram showing a fourth state of a switch network according to an embodiment.

Referring to FIG. 8, the control circuit may turn off the first switch Q1 and the third switch Q3 and turn on the second switch Q2 and the fourth switch Q4 to make the switch network 310 be in a fourth state.

In the fourth state, the flying capacitor C_{FLY} and the inductor L may be connected with each other in series so that the inductor current i_{L} and the flying capacitor voltage V_{CFLY} may form resonant waveforms.

In the fourth state, the inductor current i_{L} may form a resonant waveform, which increases and then decreases. The control circuit may turn off or turn on the respective switch Q1-Q4 at zero current according to such a resonant waveform of the inductor current i_{L}.

Operations of the switch network in the fourth state may be identical to operations of a resonant converter.

The control circuit may control the switch network to be alternately in the third state and in the fourth state.

A regulator according to an embodiment may deliver power through the resonance of the flying capacitor and the inductor.

The control circuit may drive the switch network in the third state and the fourth state with a frequency of the resonance of the flying capacitor and the inductor or a frequency close thereto. In this way, the regulator may deliver power through the resonance of the flying capacitor and the inductor like a resonant converter.

The switch network may be controlled to be alternately in the third state and in the fourth state. For example, the switch network may operate in the fourth state after having operated in the third state, and may operate in the third state after having operated in the fourth state.

When referring to the formation of one increase/decrease waveform by the inductor current increasing and then decreasing as a pulse-shaping, one pulse-shaping may be made in each one of the third state and the fourth state.

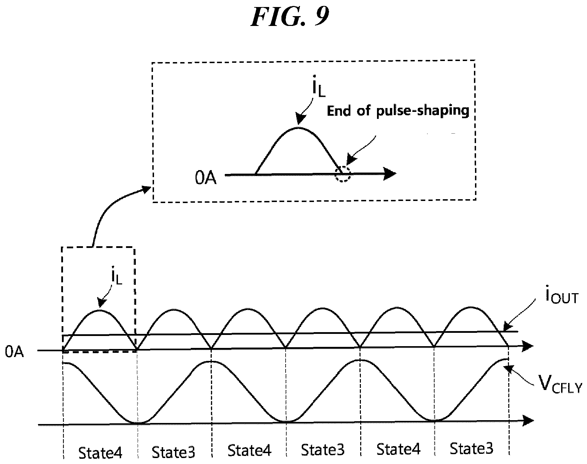

FIG. 9 is a diagram showing a pulse-shaping of an inductor current using a third state and a fourth state in an embodiment.

Referring to FIG. 9, the control circuit may control the switch network to be alternately in the third state and in the fourth state.

In addition, the control circuit may end the third state or the fourth state when the inductor current i_{L} reaches the zero level.

In the third state, the flying capacitor may be charged and the flying capacitor voltage V_{CFLY} may increase. The inductor current i_{L} may increase, and then, decrease. In the third state, when the inductor current iL reaches the zero level (a level within a predetermined error range from zero), the control circuit may end the third state and form the end of a pulse-shaping.

In the fourth state, the flying capacitor may be discharged and the flying capacitor voltage V_{CFLY} may decrease. The inductor current i_{L} may increase, and then, decrease. In the fourth state, when the inductor current iL reaches the zero level (a level within a predetermined error range from zero), the control circuit may end the fourth state and form the end of a pulse-shaping.

The regulator may make the switch network to be alternately in the third state and the fourth state.

A regulator according to an embodiment may make another state be formed between the third state and the fourth state.

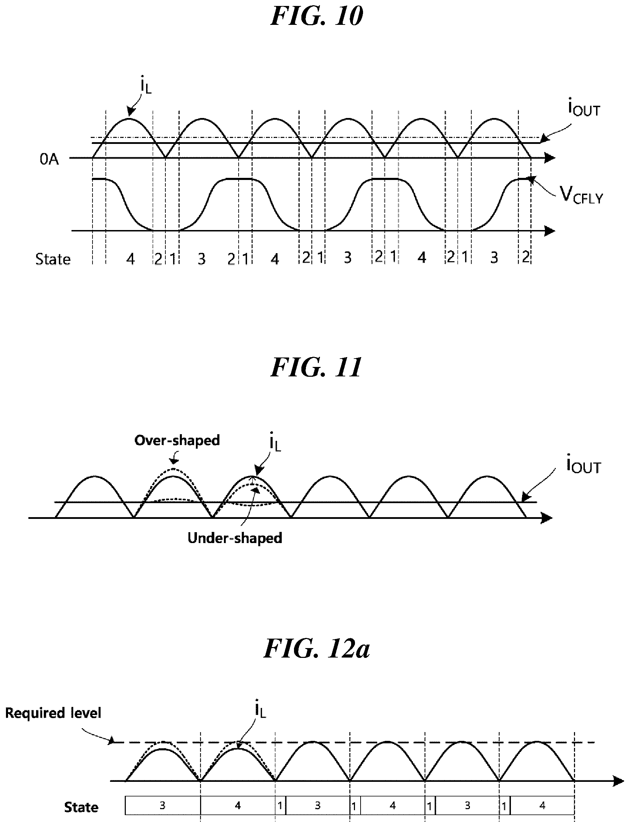

FIG. 10 is a diagram showing that a first state and a second state are additionally formed between a third state and a fourth state in an embodiment.

Referring to FIG. 10, the control circuit may control the switch network to be alternately in the third state and the fourth state and make the first state and the second state be formed between the third state and the fourth state.

The control circuit may control the switch network to be in the first state before it is in the third state. In the first state, the first voltage is supplied through one side of the inductor and this results in the linear increase of the inductor current.

In addition, the control circuit may control the switch network to be in the third state to deliver resonance energy of the flying capacitor and the inductor to an output side. Here, the inductor current may form a resonant waveform.

Since the inductor current increases by a certain magnitude in the first state, it may be ended at a level higher than zero in the third state.

The control circuit may control the switch network to be in the second state after having ended the third state. In the second state, the low voltage is supplied through one side of the inductor and this results in the linear decrease of the inductor current.

Subsequently, the control circuit may control the switch network to be in the first state, then, in the fourth state after the first state, and in the second state after the fourth state.

Meanwhile, the pulse-shaping of the inductor current may not be made as desired. The peak of the inductor current may be higher than a desired level or lower than the desired level. In a case when the peak of the inductor current is higher than a desired level, this waveform may be referred to as an over-shaped pulse, and in a case when the peak is lower than a desired level, this waveform may be referred to as an under-shaped pulse.

FIG. 11 is a diagram showing an over-shaped pulse and an under-shaped pulse.

Referring to FIG. 11, in some cases, over-shaped pulses, referring to a case when the level of the inductor current iL is higher than a desired level, may be formed. In such cases, an output current iₒᵤₜ may be higher than a desired level.

In some other cases, under-shaped pulses, referring to a case when the level of the inductor current iL is lower than a desired level, may be formed. In such cases, the output current iₒᵤₜ may be lower than a desired level.

In order to adjust the output current iₒᵤₜ to be a desired level, the regulator may dispose another state between the third state and the fourth state.

FIG. 12a is a diagram of a first example showing that a regulator adds a first state between a third state and a fourth state.

Referring to FIG. 12a, the control circuit of the regulator may make the first state be formed between the third state and the fourth state when the magnitude of the inductor current i_{L} is less than a required range or a required level.

The control circuit may compare the peak of the inductor current i_{L} with a predetermined required level and, when the peak of the inductor current i_{L} is lower than the predetermined required level, add the first state between the third state and the fourth state or between the fourth state and the third state.

The magnitude of the inductor current i_{L} may be determined using a function of the flying capacitor voltage in the resonance. When energy charging the flying capacitor in the resonance is insufficient, a desired magnitude of the inductor current i_{L} may not be formed.

In order to alleviate such a problem, the control circuit may build up the inductor current through the first state, and then, perform the resonance (alternation of the third state and the fourth state). This results in forming a desired magnitude of the inductor current i_{L} and in making the output current to have a desired magnitude.

The control circuit may determine a time point for adding the first state and a time point for ending the same in combination of inputted sensing values, such as the first voltage, the second voltage, the flying capacitor voltage, the third node voltage, etc. Otherwise, the control circuit may determine a time point for transition among the first state, the third state, and the fourth state in combination of the inputted sensing values.

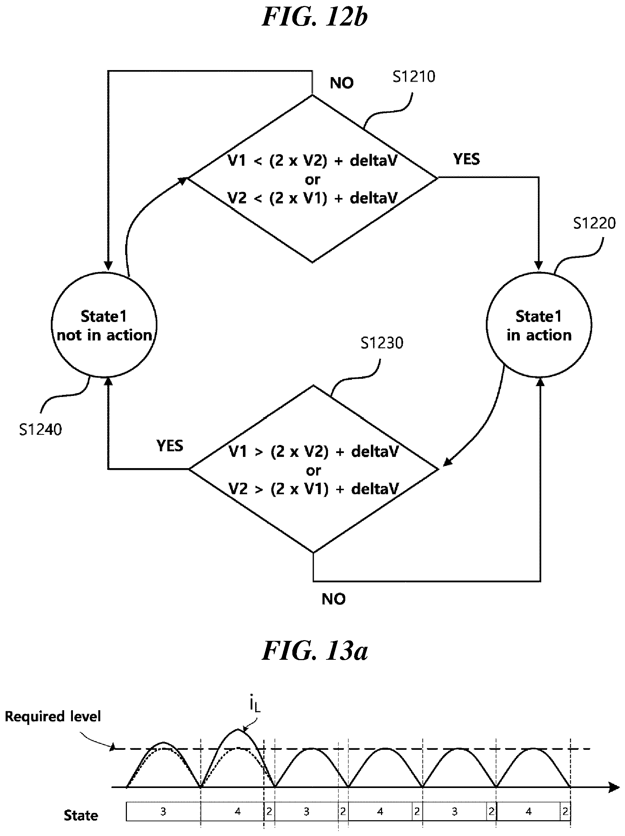

FIG. 12b is a diagram of a second example showing that a regulator adds a first state between a third state and a fourth state.

Referring to FIG. 12b, the control circuit may determine whether to add the first state based on the relation between input voltages and output voltages of the regulator.

When an input voltage of the regulator is less than a voltage acquired by subtracting a delta voltage from twice of an output voltage of the regulator (YES in S1210), the control circuit may add the first state between the third state and the fourth state or between the fourth state and the third state (S1220).

When the first voltage V1 is the input voltage and the second voltage V2 is the output voltage, and the first voltage V1 is less than a voltage acquired by adding the delta voltage to the twice of the second voltage V2, the control circuit may add the first state. When the second voltage V2 is the input voltage and the first voltage V1 is the output voltage, and the second voltage V2 is less than a voltage acquired by adding the delta voltage to the twice of the first voltage V1, the control circuit may add the first state. Here, the delta voltage is a voltage corresponding to a margin. Its magnitude may vary depending on embodiments.

The control circuit may also stop the action of the first state according to the relation between input voltages and output voltages of the regulator.

When the input voltage of the regulator is greater than a voltage acquired by adding the delta voltage to the twice of the output voltage of the regulator (YES in S1230), the control circuit may make the first state not in action (S1240).

When the first voltage V1 is the input voltage and the second voltage V2 is the output voltage, and the first voltage V1 is greater than a voltage acquired by adding the delta voltage to the twice of the second voltage V2, the control circuit may make the first state not in action. When the second voltage V2 is the input voltage and the first voltage V1 is the output voltage, and the second voltage V2 is greater than a voltage acquired by adding the delta voltage to the twice of the first voltage V1, the control circuit may make the first state not in action.

FIG. 13a is a diagram of a first example showing that a regulator adds a second state between a third state and a fourth state.

Referring to FIG. 13a, the control circuit of the regulator may make the second state be formed between the third state and the fourth state when the magnitude of the inductor current i_{L} is greater than a required range or a required level.

The control circuit may compare the peak of the inductor current i_{L} with a predetermined required level and, when the peak of the inductor current i_{L} is higher than the predetermined required level, may add the second state between the third state and the fourth state or between the fourth state and the third state.

The magnitude of the inductor current i_{L} may be determined using a function of the flying capacitor voltage in the resonance. When energy charging the flying capacitor in the resonance is more than necessary, a desired magnitude of the inductor current i_{L} may not be formed and the inductor current i_{L} may excessively increase. In such a case, the output current may not be formed to have a desired magnitude and internal devices or external devices may be damaged due to excessive currents.

In order to alleviate such a problem, the control circuit may lower the inductor current through the second state, and then, perform the resonance (alternation of the third state and the fourth state). This results in forming a desired magnitude of the inductor current i_{L} and in making the output current have a desired magnitude.

The control circuit may determine a time point for adding the second state and a time point for ending the same in combination of inputted sensing values, such as the first voltage, the second voltage, the flying capacitor voltage, the third node voltage, etc. Otherwise, the control circuit may determine a time point for transition among the second state, the third state, and the fourth state in combination of the inputted sensing values.

When the inductor current i_{L} reaches the zero level, the control circuit may end the second state.

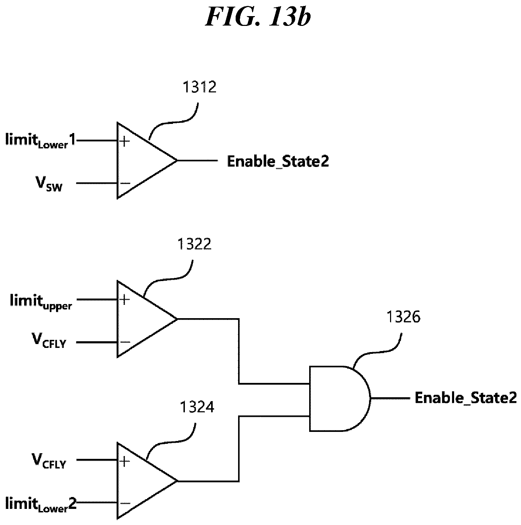

FIG. 13b is a diagram of a second example showing that a regulator adds a second state between a third state and a fourth state.

Referring to FIG. 13b, for example, the control circuit of the regulator may compare a third node voltage Vsw with a first lower limit value limit_{Lower}1 and, when the third node voltage Vsw is lower than the first lower limit value limit_{Lower}1, generate an enable signal for the second state Enable_State2 (change an enable signal for the second state Enable_State2 from low to high). The control circuit may comprise a first lower limit comparator 1312. Through a positive input terminal of the first lower limit comparator 1312, a signal corresponding to the first lower limit value limit_{Lower}1 may be inputted and, through a negative input terminal, a signal corresponding to the third node voltage Vsw may be inputted. Then, the first lower limit comparator 1312 may compare the third node voltage Vsw and the first lower limit value limit_{Lower}1 and, when the third node voltage Vsw is lower than the first lower limit value limit_{Lower}1, generate the enable signal for the second state Enable_State2.

For another example, the control circuit of the regulator may compare the flying capacitor voltage V_{CFLY} with an upper limit value limit_{Upper} and a second lower limit value limit_{Lower}2 and, when the flying capacitor voltage V_{CFLY} is less than the upper limit value limit_{Upper} and greater than the second lower limit value limit_{Lower}2, may generate the enable signal for the second state Enable_State2 (change the enable signal for the second state Enable_State2 from low to high). The control circuit may comprise an upper limit comparator 1322, a second lower limit comparator 1324, and an AND logic circuit 1326. Through a positive input terminal of the upper limit comparator 1322, a signal corresponding to the upper limit value limit_{Upper} may be inputted and, through a negative input terminal, a signal corresponding to the flying capacitor voltage V_{CFLY} may be inputted. Through a positive input terminal of the second lower limit comparator 1324, a signal corresponding to the flying capacitor voltage V_{CFLY} may be inputted and, through a negative input terminal, a signal corresponding to the second lower limit value limit_{Lower}2 may be inputted. Then, outputs from the upper limit comparator 1322 and the second lower limit comparator 1324 may be inputted into the AND logic circuit 1326. When all the two outputs are high, the AND logic circuit 1326 may generate an enable signal for the second state Enable_State2.

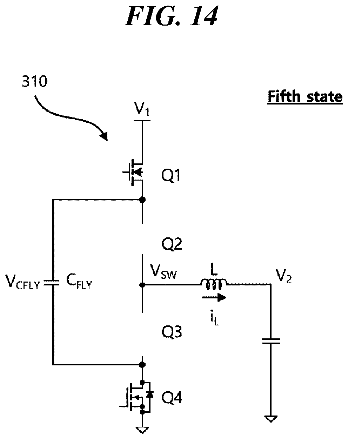

FIG. 14 is a diagram showing a fifth state of a switch network according to an embodiment.

Referring to FIG. 14, the control circuit may turn on the first switch Q1 and the fourth switch Q4 and turn off the second switch Q2 and the third switch Q3 to make the switch network 310 be in the fifth state.

In an initial operation or in an abnormal situation, when the flying capacitor voltage V_{CFLY} is lower than a predetermined voltage range or a predetermined voltage level, the control circuit may control the switch network 310 to be in the fifth state.

In the fifth state, among the first voltage V1, the first switch Q1, the flying capacitor C_{FLY}, the fourth switch Q4, and the ground voltage, a current path may be formed in series, and currents in such a current path may charge the flying capacitor C_{FLY}.

In order to prevent that excessive currents, such as inrush currents, flow into the first switch Q1 and/or the fourth switch Q4 in the fifth state, the control circuit may operate the first switch Q1 and/or the fourth switch Q4 in a linear mode. Here, the control circuit may sense currents flowing into the first switch Q1 and/or the fourth switch Q4 and control the first switch Q1 and/or the fourth switch Q4 according to sensing values.

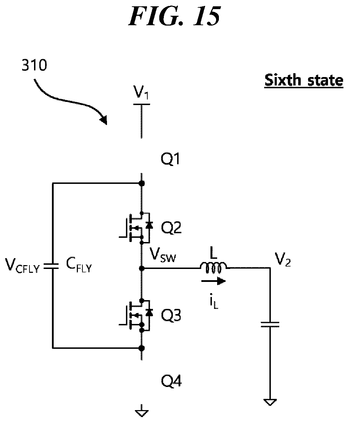

FIG. 15 is a diagram showing a sixth state of a switch network according to an embodiment.

Referring to FIG. 15, the control circuit may turn off the first switch Q1 and the fourth switch Q4 and turn on the second switch Q2 and the third switch Q3 to make the switch network 310 be in the sixth state.

In an abnormal situation, when the flying capacitor voltage V_{CFLY} is higher than a predetermined voltage range or a predetermined voltage level, the control circuit may control the switch network 310 to be in the sixth state.

In the sixth state, the second switch Q2 and the third switch Q3 may be disposed in parallel to the flying capacitor C_{FLY}. Through the second switch Q2 and the third switch Q3, the flying capacitor C_{FLY} may be discharged.

In order to prevent that excessive currents flow into the second switch Q2 and/or the third switch Q3 in the sixth state, the control circuit may operate the second switch Q2 and/or the third switch Q3 in a linear mode. Here, the control circuit may sense currents flowing into the second switch Q2 and/or the third switch Q3 and control the second switch Q2 and/or the third switch Q3 according to sensing values.

The regulator may perform a pulse-skip control together with a pulse-shaping control, which form a resonant waveform of the inductor current.

The regulator may make the inductor current to have a resonant waveform using the third state and the fourth state. Making the inductor current to have a resonant waveform may be referred to as a pulse output and maintaining the inductor current to be at the zero level or to be at a very low level may be referred to as a pulse-skip.

The regulator may output pulses or skip pulses through controls.

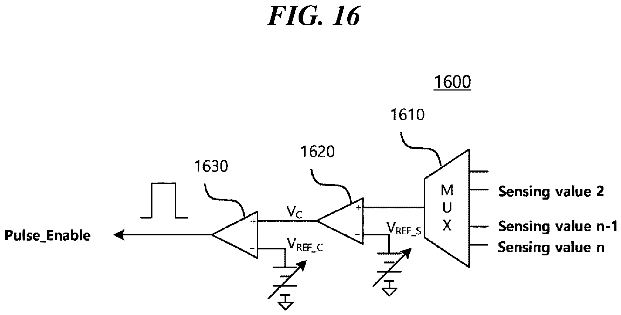

FIG. 16 is a diagram showing an exemplary configuration for performing a pulse-skip control in a control circuit according to an embodiment.

Referring to FIG. 16, a pulse-skip controller 1600 of the control circuit may comprise a sensing value combination circuit 1610, a first comparison circuit 1620, and a second comparison circuit 1630.

The sensing value combination circuit 1610 may select one of sensing values using a multiplexer or generate one sensing value by combining two or more sensing values.

When an output from the sensing value combination circuit 1610 is referred to as a control value, the first comparison circuit 1620 may generate an error value Vc by comparing the control value with a reference value V_{REF_S}. The first comparison circuit 1620 may generate an error value Vc by subtracting the reference value V_{REF _S} from the control value.

The second comparison circuit 1630 may compare the error value Vc and a criterion value V_{REF_C}, and output a pulse enable signal when the error value Vc is greater than the criterion value V_{REF_C} and stop outputting the pulse enable signal when the error value Vc is less than the criterion value V_{REF_C}.

When the pulse enable signal is outputted, the control circuit may output pulses by controlling the switch network to be in the third state or the fourth state, and when the pulse enable signal is not outputted, the control circuit may perform the pulse-skip control such that no pulses are outputted.

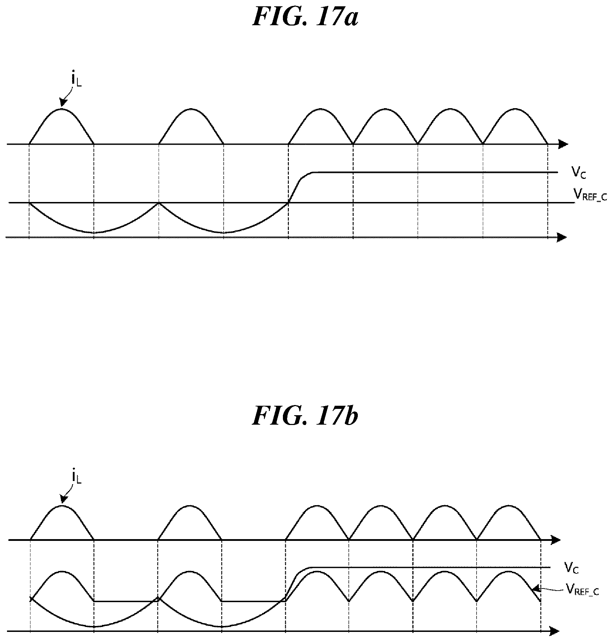

FIG. 17a is a diagram showing a main waveform in a first example of a pulse-skip control.

Referring to FIG. 17a, when the error value Vc reaches the criterion value V_{REF_C}, the control circuit may make the inductor current i_{L} to have a resonant waveform by the pulse-shaping control. In addition, when the error value Vc is higher than the criterion value V_{REF_C}, the control circuit may make the inductor current i_{L} to have a resonant waveform by the pulse-shaping control that the switch network is controlled to be in the third state or in the fourth state.

When the error value Vc is less than the criterion value V_{REF_C}, the control circuit may make the inductor current maintained at the zero level by the pulse-skip control. Here, the first switch or the fourth switch may be turned off.

The control circuit may periodically determine whether to perform the pulse-shaping control or to perform the pulse-skip control, or may determine it every end of the pulse-shaping control.

FIG. 17b is a diagram showing a main waveform in a second example of a pulse-skip control.

Referring to FIG. 17b, when the error value Vc reaches the criterion value V_{REF_C}, the control circuit may make the inductor current i_{L} to have a resonant waveform by the pulse-shaping control. In addition, when the error value Vc is higher than the criterion value V_{REF_C}, the control circuit may make the inductor current i_{L} to have a resonant waveform by the pulse-shaping control that the switch network is controlled to be in the third state or in the fourth state.

When the error value Vc is less than the criterion value V_{REF_C}, the control circuit may make the inductor current maintained at the zero level by the pulse-skip control. Here, the first switch or the fourth switch may be turned off.

Meanwhile, the criterion value V_{REF_C} may be variable. For example, the criterion value V_{REF_C} may be a value corresponding to a certain multiple of the inductor current i_{L}.

An input of the regulator may be the first voltage and an output thereof may be the second voltage. Alternatively, the input of the regulator may be the second voltage and the output thereof may be the first voltage.

Meanwhile, separately from the description referring to FIG. 12a and FIG. 12b, the control circuit may determine whether to make the first state be in action according to the pulse enable signal.

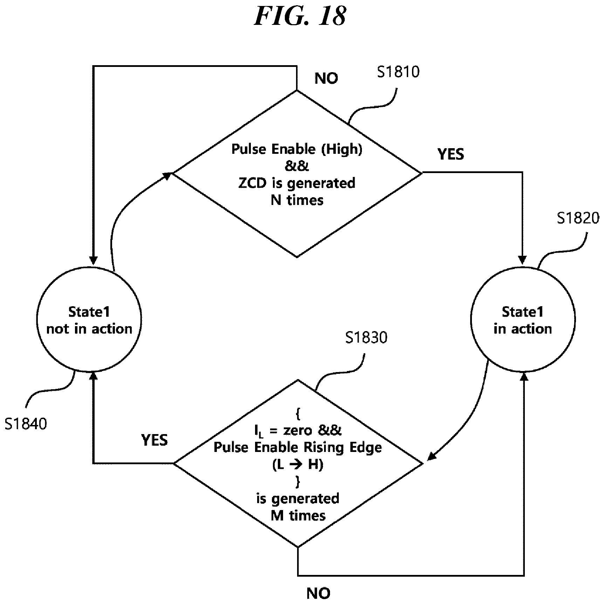

FIG. 18 is a diagram of a third example showing that a regulator adds a first state between a third state and a fourth state.

Referring to FIG. 18, the control circuit may determine whether to add the first state using the pulse enable signal and the magnitude of the inductor current i_{L}.

When zero current detections (ZCD) of the inductor current i_{L} are generated consecutively N times (N is a natural number equal to or higher than 2) (YES in S1810) in a situation where the pulse enable signal is continuously outputted (in a situation where the signal is maintained at a high level), the control circuit may add the first state between the third state and the fourth state or between the fourth state and the third state (S1820).

In addition, when a situation, where the pulse enable signal is generated while the inductor current i_{L} is maintained at the zero level (a situation where a rising edge is generated in the pulse enable signal), occurs consecutively M times (M is a natural number equal to or higher than 2) (YES in S1830), the control circuit may not make the first state be in action (S1840).

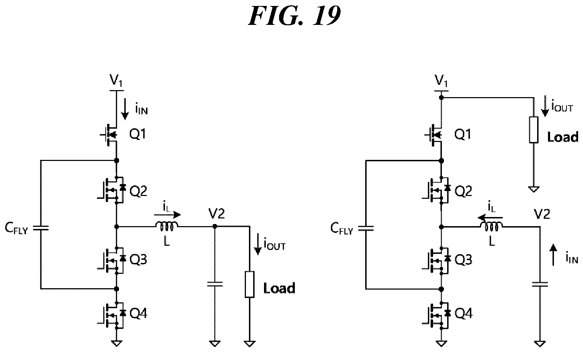

FIG. 19 is a diagram showing an example of an input and an output of a regulator according to an embodiment.

As shown the left figure in FIG. 19, the regulator may receive the first voltage V1 as an input and output the second voltage V2. In such an example, a load may be connected to a node where the second voltage V2 is formed. An input current i_{IN} may be supplied through the first switch Q1 and an output current i_{OUT} may have a waveform very similar to that of the inductor current i_{L}.

As shown the right figure in FIG. 19, the regulator may receive the second voltage V2 as an input and output the first voltage V1. In such an example, the load may be connected to a node where the first voltage V1 is formed. An input current i_{IN} may have a waveform very similar to that of the inductor current i_{L} and an output current i_{OUT} may be supplied to the load through the first switch Q1.

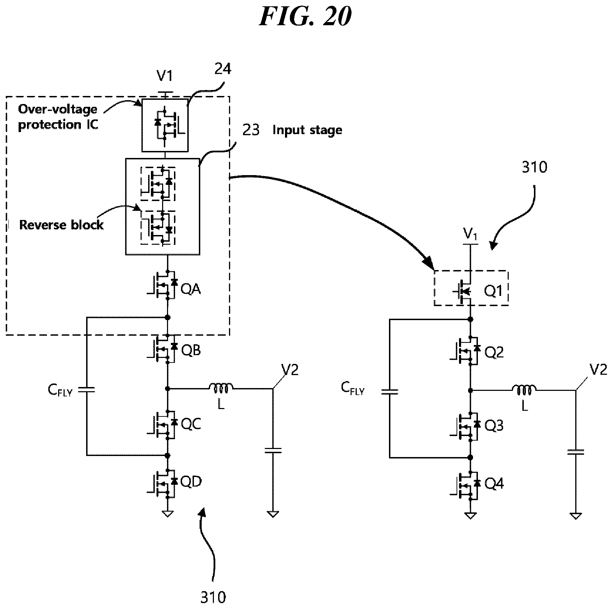

FIG. 20 is a diagram for illustrating device characteristics of a first switch in a switch network according to an embodiment.

In FIG. 20, the left figure shows the power conversion device 20 described by referring to FIG. 2 and the right figure shows a regulator according to an embodiment.

The power conversion device 20 described with reference to FIG. 2 requires the over-voltage protection IC 24 and the input stage 23. However, in the switch network 310 according an embodiment, the first switch Q1 may perform functions of the over-voltage protection IC 24 and the input stage 23 together.

In the switch network 310 according to an embodiment, the first switch Q1 may be an active device having characteristics of a bi-directional body diode. For example, the first switch Q1 may be a bi-directional GaN FET or a Si-FEF Back to Back device.

In a case when such an active device is used as the first switch Q1, the first switch Q1 may perform a function of transitioning the switch network into the zeroth state when the first voltage V1 is higher than a predetermined voltage level and a function of a reverse block in the input stage as well in addition to a function as a switching device.

Meanwhile, the regulator according to an embodiment may have a high expandability.

When calling a structure, in which a control circuit, a switch network, a flying capacitor, and inductor described above are combined, a regulator block, multiple regulator blocks may form an expansive regulator while sharing an output.

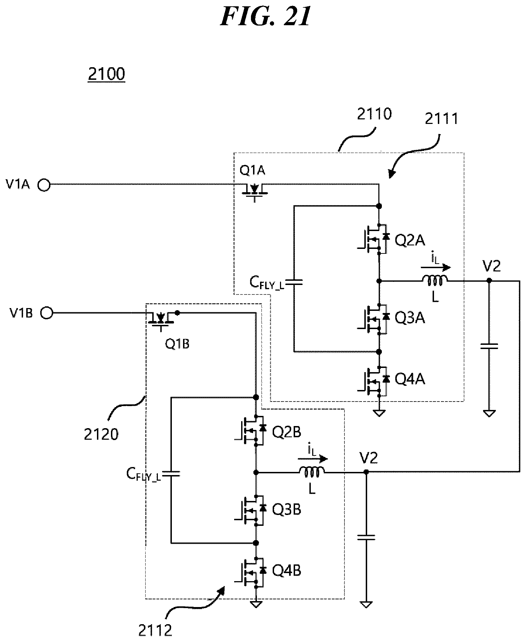

FIG. 21 is a configuration diagram of a first example of an expanded regulator.

Referring to FIG. 21, a regulator 2100 may comprise a first regulator block 2110 and a second regulator block 2120.

Each of the first regulator block 2110 and the second regulator block 2120 may comprise a switch network according to an embodiment described above. In addition, each of the first regulator block 2110 and the second regulator block 2120 may control a switch network to be in one of seven states, which are the zeroth state to the sixth state described above.

Each of the first regulator block 2110 and the second regulator block 2120 may output the second voltage V2. Additionally, the first regulator block 2110 and the second regulator block 2120 may be disposed in parallel to each other and share outputs.

The first regulator block 2110 may include a first switch network 2111 comprising a 1-1th switch Q1A, a 2-1th switch Q2A, a 3-1th switch Q3A, and a 4-1th switch Q4A. The first regulator block 2110 may receive a 1-1th voltage V1A as an input and output the second voltage V2.

The second regulator block 2120 may include a second switch network 2121 comprising a 1-2th switch Q1B, a 2-2th switch Q2B, a 3-2th switch Q3B, and a 4-2th switch Q4B. The second regulator block 2120 may receive a 1-2th voltage V1B as an input and output the second voltage V2.

The 1-1th voltage V1A and the 1-2th voltage V1B may have different levels or a same level.

The regulator 2100 according to the first example may have a first power path, in which power flows from a node, to which the 1-1th voltage V1A is supplied, to a node, from which the second voltage V2 is outputted, and a second power path, in which power flows from a node to which the 1-2th voltage V1B is supplied, to a node, from which the second voltage V2 is outputted.

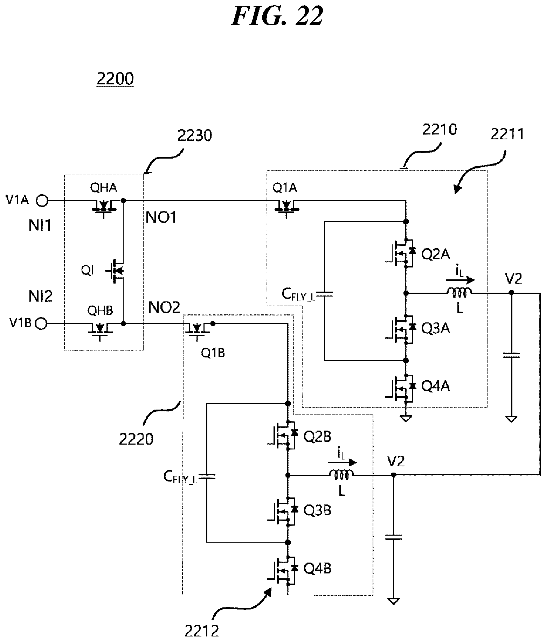

FIG. 22 is a configuration diagram of a second example of an expanded regulator.

Referring to FIG. 22, a regulator 2200 may comprise a first regulator block 2210, a second regulator block 2220, and a multiplexer (MUX) circuit 2230.

Each of the first regulator block 2210 and the second regulator block 2220 may comprise a switch network according to an embodiment described above. In addition, each of the first regulator block 2210 and the second regulator block 2220 may control a switch network to be in one of seven states, which are the zeroth state to the sixth state described above.

Each of the first regulator block 2210 and the second regulator block 2220 may output the second voltage V2. Additionally, the first regulator block 2210 and the second regulator block 2220 may be disposed in parallel to each other and share outputs.

The first regulator block 2210 may include a first switch network 2211 comprising a 1-1th switch Q1A, a 2-1th switch Q2A, a 3-1th switch Q3A, and a 4-1th switch Q4A. The first regulator block 2210 may output the second voltage V2.

The second regulator block 2220 may include a second switch network 2221 comprising a 1-2th switch Q1B, a 2-2th switch Q2B, a 3-2th switch Q3B, and a 4-2th switch Q4B. The second regulator block 2220 may output the second voltage V2.

The MUX circuit 2230 may selectively deliver a 1-1th voltage V1A or a 1-2th voltage V1B to the first regulator block 2210 and/or the second regulator block 2220.

For example, the MUX circuit 2230 may deliver the 1-1th voltage V1A to the first regulator block 2210 and the 1-2th voltage V1B to the second regulator block 2220. In this case, the regulator 2220 according to the second example may operate similarly to the regulator according to the first example (2100 in FIG. 21).

For another example, the MUX circuit 2230 may deliver the 1-1th voltage V1A to both the first regulator block 2210 and the second regulator block 2220 and the 1-2th voltage to both the first regulator block 2210 and the second regulator block 2220.

The MUX circuit 2230 may include an upper switch QHA, a lower switch QHB, and a connection switch QI.

The upper switch QHA may control connection between a first input node NI1 and a first output node NO1. The lower switch QHB may control connection between a second input node NI2 and a second output node NO2. The connection switch QI may control connection between the first output node NO1 and the second output node NO2.

Through the first input node N11, the 1-1th voltage V1A may be supplied and, through the second input node NI2, the 1-2th voltage V1B may be supplied. In addition, the first output node NO1 may be connected with an input of the first regulator 2210 and the second output node NO2 may be connected with an input of the second regulator block 2220.

The MUX circuit 2230 may turn on the upper switch QHA and the lower switch QHB and turn off the connection switch QI to deliver the 1-1th voltage V1A to the first regulator block 2210 and the 1-2th voltage V1B to the second regulator block 2220.

In addition, the MUX circuit 2230 may turn on the upper switch QHA, turn off the lower switch QHB, and turn on the connection switch QI to deliver the 1-1th voltage V1A to both the first regulator block 2210 and the second regulator block 2220.

Further , the MUX circuit 2230 may turn off the upper switch QHA, turn on the lower switch QHB, and turn off the connection switch QI to deliver the 1-2th voltage V1B to both the first regulator block 2210 and the second regulator block 2220.

In such a parallel structure, the impedance, observed in a node from which the second voltage V2 is outputted, is low, which results in increasing the efficiency.

In addition, the upper switch QHA and the lower switch QHB may be used for the over-voltage protection, and therefore, the 1-lth switch Q1A and the 1-2 switch Q1B do not need to support bi-directional body diode operations.

The 1-1th voltage V1A and the 1-2th voltage V1B may have different levels or a same level.

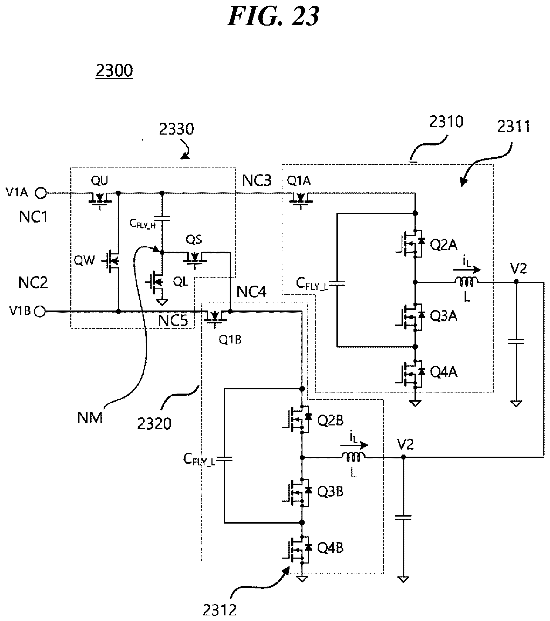

FIG. 23 is a configuration diagram of a third example of an expanded regulator.

Referring to FIG. 23, a regulator 2300 may comprise a first regulator block 2310, a second regulator block 2320, and a switched capacitor converter 2330.

Each of the first regulator block 2310 and the second regulator block 2320 may comprise a switch network according to an embodiment described above. In addition, each of the first regulator block 2310 and the second regulator block 2320 may control a switch network to be in one of seven states, which are the zeroth state to the sixth state described above.

Each of the first regulator block 2310 and the second regulator block 2320 may output the second voltage V2. Additionally, the first regulator block 2310 and the second regulator block 2320 may be disposed in parallel to each other and share outputs.

The first regulator block 2310 may include a first switch network 2311 comprising a 1-1th switch Q1A, a 2-1th switch Q2A, a 3-1th switch Q3A, and a 4-1th switch Q4A. The first regulator block 2310 may output the second voltage V2.

The second regulator block 2320 may include a second switch network 2321 comprising a 1-2th switch Q1B, a 2-2th switch Q2B, a 3-2th switch Q3B, and a 4-2th switch Q4B. The second regulator block 2320 may output the second voltage V2.

The switched capacitor converter 2330 may perform both a function of a MUX and a function of a converter.

The switched capacitor converter 2330 may form a power path, in which power is delivered from the 1-1 voltage V1A to the second voltage V2, and a power path, in which power is delivered from the 1-2th voltage V1B to the second voltage V2 using the MUX function. On the contrary, it may also form a power path, in which power is delivered from the second voltage V2 to the 1-1th voltage V1A, and a power path, in which power is delivered from the second voltage V2 to the 1-2th voltage V1B.

The switched capacitor converter 2330 may make the conversion ratio, in which the 1-1th voltage V1A is converted into the second voltage V2, or the conversion ratio, in which the 1-2th voltage V1B into the second voltage V2, be expanded to 4 to 1 or 3 to 1 using the converter function.

The switched capacitor converter 2330 may include a first control switch QU, a second control switch QW, a third control switch QS, a fourth control switch QL, and a flying capacitor C_{FLY_H}.

In order to distinguish flying capacitors C_{FLY_L} included in the respective regulator blocks 2310, 2320 and the flying capacitor C_{FLY_H} included in the switched capacitor converter 2330, each flying capacitor C_{FLY_L} included in each of the regulator blocks 2310, 2320 is referred to as a first flying capacitor C_{FLY_L} and the flying capacitor C_{FLY_H} included in the switched capacitor converter 2330 is referred to as a second flying capacitor C_{FLY_H}.

The first control switch QU may control connection between a first converter node NC1 and a third converter node NC3. The second control switch QW may control connection between the third converter node NC3 and a second converter node NC2. The third control switch QS may control connection between a middle node NM and a fourth converter node NC4. The fourth control switch QL may control connection between the middle node NM and a low voltage terminal (for example, to which the ground voltage is connected).

In the first converter node NC1, the 1-1th voltage V1A may be formed and, in the second converter node NC2, the 1-2th voltage V1B may be formed.

The third converter node NC3 may be connected with an outer side of the 1-1th switch Q1A of the first regulator block 2310 and the fourth converter node NC4 may be connected with an inner side of the 1-2th switch Q1B of the second regulator block 2320. Here, the outer side may refer to an exterior of the switch network and the inner side may refer to an interior of the switch network.

When the fourth converter node NC4 is connected with the inner side of the 1-2th switch Q1B of the second regulator block 2320, a fifth converter node NC5 may be connected with an outer side of the 1-2th switch Q1B of the second regulator block 2320.

The second converter node NC2 may be electrically identical to the fifth converter node NC5.

The second flying capacitor C_{FLY_H} may be connected with the third converter node NC3 in its one side and with the middle node NM in its other side.

During a normal operation, in the middle node NM, a voltage corresponding to about 1/2 of the 1-1th voltage V1A or a voltage corresponding to 1/2 of the 1-2th voltage V1B may be formed.

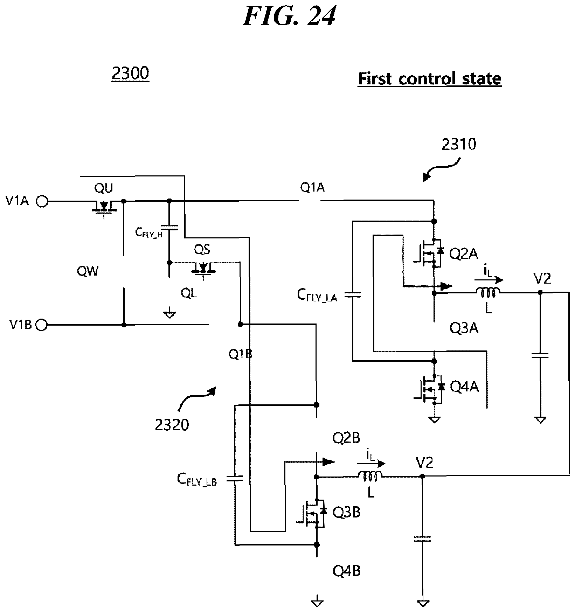

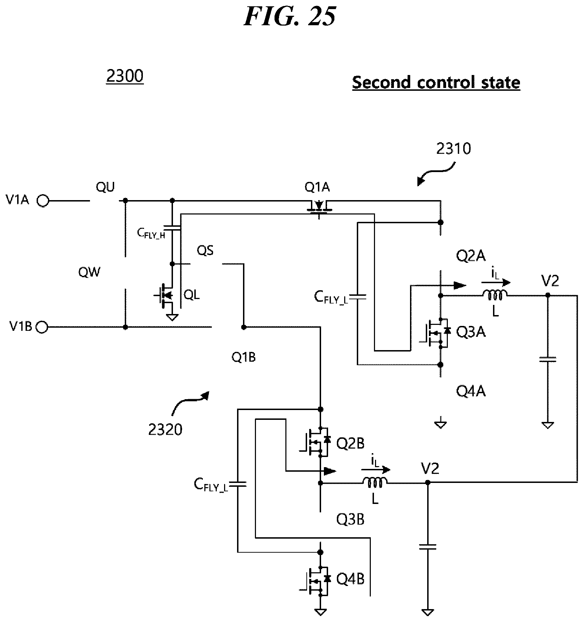

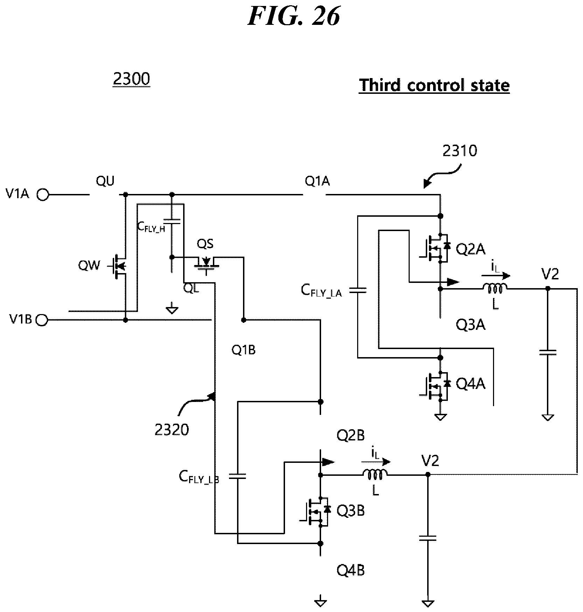

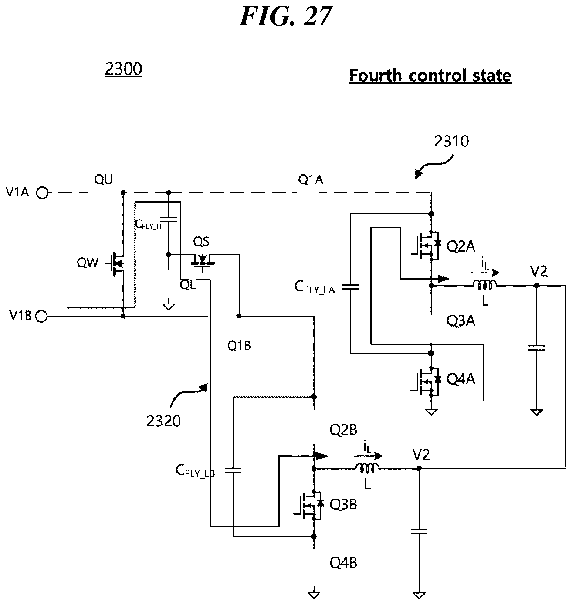

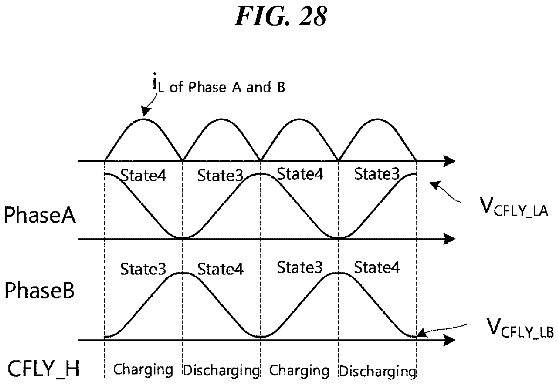

FIG. 24 is a diagram showing a first control state of a regulator according to a third example, FIG. 25 is a diagram showing a second control state of a regulator according to a third example, FIG. 26 is a diagram showing a third control state of a regulator according to a third example, FIG. 27 is a diagram showing a fourth control state of a regulator according to a third example, and FIG. 28 is a diagram showing main waveforms associated with a regulator according to a third example.

In the regulator 2300, the first regulator block 2310 and the second regulator block 2320 may be controlled to be in different states.

Referring to FIG. 24 to FIG. 28, the regulator 2300 may control in the first control state the first regulator block 2301 to be in the fourth state and the second regulator block 2320 to be in the third state.

At this time, the second flying capacitor C_{FLY_H} may be charged.

In the first control state, the second regulator block 2320 may turn off the 1-2th switch Q1B. Here, the third control switch QS of the switched capacitor converter 2320 is turned on instead of the 1-2th switch Q1B so that the second regulator block 2320 may be in a state identical to the third state.

In the first control state, the first control switch QU may be turned on, the second control switch QW may be turned off, the third control switch QS may be turned on, and the fourth control switch QL may be turned off.

In the second control state, the regulator 2300 may control the first regulator block 2310 to be in the third state and the second regulator block 2320 to be in the fourth state.

At this time, the second flying capacitor C_{FLY_H} may be discharged.

In the second control state, the first control switch QU may be turned off, the second control switch QW may be turned off, the third control switch QS may be turned off, and the fourth control switch QL may be turned on.

In the third control state, the regulator 2300 may control the first regulator block 2310 to be in the fourth state and the second regulator block 2320 to be in the third state.

At this time, the second flying capacitor C_{FLY_H} may be charged.

In the third control state, the second regulator block 2320 may turn off the 1-2th switch Q1B. Here, the third control switch QS of the switched capacitor converter 2320 is turned on instead of the 1-2th switch Q1B so that the second regulator block 2320 may be in a state identical to the third state.

In the third control state, the first control switch QU may be turned off, the second control switch QW may be turned on, the third control switch QS may be turned on, and the fourth control switch QL may be turned off.

In the fourth control state, the regulator 2300 may control the first regulator block 2310 to be in the third state and the second regulator block 2320 to be in the fourth state.

At this time, the second flying capacitor C_{FLY_H} may be discharged.

In the fourth control state, the first control switch QU may be turned off, the second control switch QW may be turned on, the third control switch QS may be turned on, and the fourth control switch QL may be turned off.

During a normal operation, the second flying capacitor C_{FLY_H} may have a voltage corresponding to about 1/2 of the 1-1th voltage V1A or a voltage corresponding to 1/2 of the 1-2th voltage V1B. If the second flying capacitor C_{FLY_H} has a voltage higher than such a voltage, the regulator 2300 may perform the second control state and the fourth control state consecutively two or more times, and if it has a voltage lower than such a voltage, the regulator 2300 may perform the first control state and the third control state consecutively two or more times. Otherwise, the regulator 2300 may sequentially perform the first control state to the fourth control state.

Meanwhile, the regulator may further improve the efficiency through cooperative controls with a host.

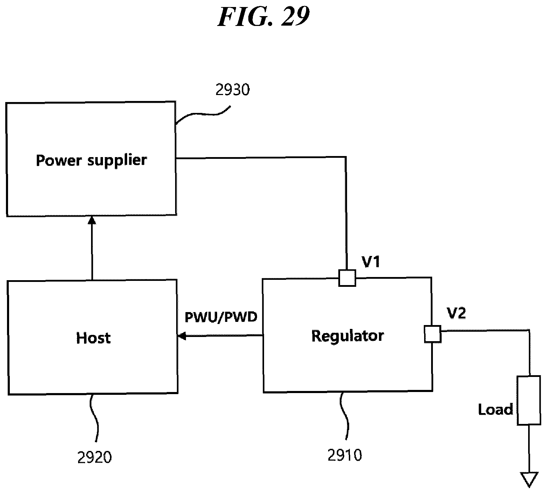

FIG. 29 is a diagram showing a cooperative control of a regulator and a host according to an embodiment.

Referring to FIG. 29, a regulator 2910 may generate a power up flag PWU to a host 2920 so that a power supplier 2930 may output higher power to the regulator 2910.

For example, when the regulator 2910 generates a power up flag PWU and transmits it to the host 2920, the host 2920 may control the power supplier 2930 to increase the level of a first voltage V1 to be supplied to the regulator 2910.

If the third state and the fourth state are consecutively alternately performed without pulse-skips in a heavy load state, a higher efficiency may be achieved. When sufficient power is not supplied from the power supplier 2930, the regulator 2910 additionally performs the first state. However, in case of a power supplier, in which output power may be adjusted, such as a PPS adapter, output power of the power supplier 2930 may be increased by the host 2920 so that the first state is not performed.

Meanwhile, when output power of the power supplier is higher than necessary, pulse-skips may occur, and such controls may increase the efficiency in a light load state. However, in a heavy load state, consecutively alternately performing the third state and the fourth state without pulse-skips results in achieving a higher efficiency. Accordingly, the regulator 2910 checks whether the efficiency is sufficient in a situation where the first state is not performed in the heavy load, and if the efficiency is not sufficient, the regulator 2910 may generate a power down flag PWD so that the power supplier 2930 decreases output power to have an optimum efficiency.

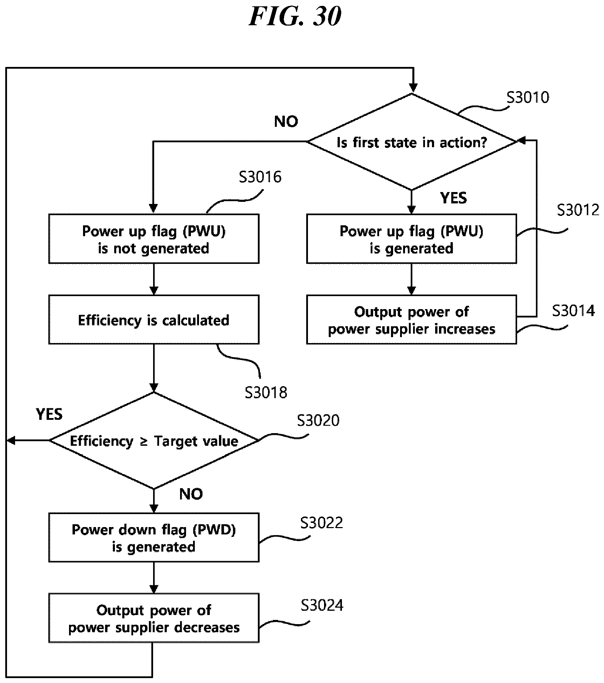

FIG. 30 is a flow diagram of a method for a cooperative control of a regulator and a host according to an embodiment.

Referring to FIG. 30, the control circuit of the regulator may check whether the first state is performed (S3010).

When the control circuit determines that the first state is in action (YES in S3010), it may generate a power up flag PWU to a device controlling the power supplier, such as a host (S3012).

According to such a power up flag, the power supplier may increase output power (S3014).

When the control circuit determines that the first state is not in action (NO in S3010), it may not generate the power up flag PWU (S3016).

Then, the control circuit may calculate the efficiency (S3018). The efficiency may be calculated, for example, by dividing a value, obtained by multiplying an output voltage value and an output current value, by a value, obtained by multiplying an input voltage value and a value of a current flowing in the first switch.

The control circuit may compare a calculated efficiency value with a target value and, when the calculated efficiency value is higher than the target value (YES in S3020), may return to S3010 where to determine whether the first state is in action.

When the calculated efficiency value is lower than the target value (NO in S3020), the control circuit may generate a power down flag PWD (S3022).

According to such a power down flag PWD, the power supplier may decrease output power (S3024).

Then, the control circuit may return to S3010 where to determine whether the first state is in action.

As described above, the regulator according to an embodiment may perform highly efficient regulations with a small size.

In addition, the regulator according to an embodiment may perform regulations regardless of types (power control levels) of input power (the first voltage or the second voltage). Therefore, there is no need to add a buck converter or a boost converter and this leads to the reduction of the size of a solution.

Further, the regulator according to one embodiment may operate switches at a LC resonant frequency and this results in minimizing power losses and increasing the efficiency.

The regulator according to an embodiment may also serve as a resonant switched capacitor converter. Accordingly, it is sufficient to adopt a small-sized flying capacitor and this allows reducing a passive device.

The regulator according to an embodiment may not require an over-voltage protection IC or an input stage, which leads to reducing the size of a solution.

Additionally, the regulator according to an embodiment has expandability that can support the increase of output power and multiple input sources.

As described above, according to the present disclosure, the efficiency of a power conversion device may increase, be stably controlled without adding complicated components, and be reduced in its size.

Since terms, such as "including," "comprising," and "having" mean that corresponding elements may exist unless they are specifically described to the contrary, it shall be construed that other elements can be additionally included, rather than that such elements are excluded. All technical, scientific, or other terms are used consistently with the meanings as understood by a person skilled in the art unless defined to the contrary. Common terms as found in dictionaries should be interpreted in the context of the related technical writings, rather than overly ideally or impractically, unless the present disclosure expressly defines them so.

Although a preferred embodiment of the present disclosure has been described for illustrative purposes, those skilled in the art will appreciate that various modifications, additions, and substitutions are possible without departing from the scope and spirit of the embodiment as disclosed in the accompanying claims. Therefore, the embodiments disclosed in the present disclosure are intended to illustrate the scope of the technical idea of the present disclosure, and the scope of the present disclosure is not limited by the embodiment. The scope of the present disclosure shall be construed on the basis of the accompanying claims in such a manner that all of the technical ideas included within the scope equivalent to the claims belong to the present disclosure.

## Claims

1. A regulator comprising:
a switch network, including a first switch block, a second switch block, a third switch block, and a fourth switch block connected in series, connected with a flying capacitor through a first node, to which the first switch block and the second switch block are connected, and through a second node, to which the third switch block and the fourth switch block are connected, and connected with an inductor through a third node, to which the second switch block and the third switch block are connected; and
a control circuit to control the switch network to be in a first state where the first switch block and the second switch block are turned on, a second state where the third switch block and the fourth switch block are turned on, a third state where the first switch block and the third switch block are turned on, or a fourth state where the second switch block and the fourth switch block are turned on, to control the switch network to be alternately in the third state and the in the fourth state where an inductor current forms a resonant waveform, and to control the switch network such that the first state is formed between the third state and the fourth state when the magnitude of the inductor current is beyond a required range.

2. The regulator of claim 1, wherein the control circuit ends the third state or the fourth state when the inductor current reaches the zero level.

3. The regulator of claim 1, wherein, when an input voltage is less than a voltage obtained by adding a delta voltage to R times (R is a positive number equal to or higher than 2) of an output voltage, the control circuit controls the switch network such that the first state is formed between the third state and the fourth state.

4. The regulator of claim 1, wherein,
when a voltage of the third node is lower than a first lower limit value, the control circuit controls the switch network such that the second state is formed between the third state and the fourth state; or
when a voltage of the flying capacitor is less than an upper limit value and greater than a second lower limit value, the control circuit controls the switch network such that the second state is formed between the third state and the fourth state.

5. The regulator of claim 4, wherein the control circuit ends the third state or the fourth state before the inductor current reaches the zero level and, when the inductor current reaches the zero level during the second state is in action, the control circuit ends the second state.

6. The regulator of claim 1, wherein the control circuit may control the switch network to be in a fifth state where the first switch block and the fourth switch block are turned on and, when a voltage of the flying capacitor is lower than a predetermined range, the control circuit controls the switch network to be in the fifth state.

7. The regulator of claim 6, wherein the control circuit operates a power semiconductor included in the first switch block or the fourth switch block in a linear mode during the fifth state is in action so as to limit the magnitude of a current supplied to the flying capacitor.

8. The regulator of claim 1, wherein the control circuit may control the switch network to be in a sixth state where the second switch block and the third switch block are turned on and, when a voltage of the flying capacitor is higher than a predetermined range, the control circuit controls the switch network to be in the sixth state.

9. The regulator of claim 1, wherein, when a difference between a control value and a reference value is higher than a criterion value, the control circuit controls the switch network to be in the third state or the fourth state and, when the difference between the control value and the reference value is lower than the criterion value, the control circuit controls the switch network to be in a state where the first switch block to the fourth switch block are turned off.

10. The regulator of claim 1, wherein a high voltage is supplied to one side of the first switch block, and a power semiconductor included in the first switch block is an active device having characteristics of a bi-directional body diode.

11. A regulator comprising:
a switch network including multiple switch devices, connected with a flying capacitor through at least two of connection nodes for the switch devices, connected with an inductor through at least one of the connection nodes, supplied with a high voltage through one side, and supplied with a low voltage through the other side; and
a control circuit to control the switch network to be in a first state where the high voltage is connected to one side of the inductor, a second state where the low voltage is connected to one side of the inductor, a third state where the high voltage, the flying capacitor, and the inductor are connected in series so that an inductor current forms a resonant waveform, and a fourth state where the low voltage, the flying capacitor, and the inductor are connected in series so that an inductor current forms a resonant waveform, to control the switch network to be alternately in the third state and the fourth state, and to control the switch network such that the first state or the second state is formed between the third state and the fourth state when the magnitude of the inductor current is beyond a required range.

12. The regulator of claim 11, wherein, when the inductor current reaches the zero level, the control circuit ends the third state or the fourth state.

13. The regulator of claim 11, wherein, when a difference between a control value and a reference value is higher than a criterion value, the control circuit outputs a pulse enable signal with a high level and, when the number that the inductor current reaches the zero level is more than N times (N is a natural number equal to or higher than 2) in a state where the pulse enable signal is maintained at a high level, the control circuit controls the switch network such that the first state is formed between the third state and the fourth state.

14. The regulator of claim 11, wherein, when the first state is in action, the control circuit generates a power up flag and transmit it to a device controlling a power supplier so that the power supplier supplying the high voltage can increase output power.

15. The regulator of claim 14, wherein, when the first state is not in action, the control circuit does not generate the power up flag and calculate an efficiency value and, when the efficiency value is less than a target value, the control circuit generates a power down flag so that the power supplier may decrease output power.

16. The regulator of claim 11, wherein the control circuit may control the switch network to be in a fifth state where one side of the inductor floats and the high voltage, the flying capacitor, and the low voltage are connected in series and, when the flying capacitor has a voltage lower than a predetermined range, the control circuit controls the switch network to be in the fifth state.

17. The regulator of claim 16, wherein, in an initial operation, the control circuit controls the switch network to be in the fifth state and operate a power semiconductor, which is turned on in the fifth state, in a linear mode to limit the magnitude of a current supplied to the flying capacitor.

18. A regulator including multiple regulator blocks, sharing outputs and disposed in parallel to each other, each comprising:
a switch network including multiple switch devices, connected with a flying capacitor through at least two of connection nodes for the switch devices, connected with an inductor through at least one of the connection nodes, supplied with a high voltage through one side, and supplied with a low voltage through the other side; and
a control circuit to control the switch network to be in a first state where the high voltage is connected to one side of the inductor, a second state where the low voltage is connected to one side of the inductor, a third state where the high voltage, the flying capacitor, and the inductor are connected in series so that an inductor current forms a resonant waveform, and a fourth state where the low voltage, the flying capacitor, and the inductor are connected in series so that an inductor current forms a resonant waveform, to control the switch network to be alternately in the third state and the fourth state, and to control the switch network such that the first state or the second state is formed between the third state and the fourth state when the magnitude of the inductor current is beyond a required range.

19. The regulator of claim 18, further comprising a switched capacitor converter disposed at an input side of the regulator blocks.

20. The regulator of claim 18, wherein, regarding the third state and the fourth state, the regulator controls at least two of the regulator blocks to be in different states.
